# EUROPEAN PATENT SPECIFICATION

(11) **EP 1 430 769 B1**
(45) Date of publication and mention of the grant of the patent: **30.10.2013**
(21) Application number: 02770215.8
(22) Date of filing: 25.09.2002
(51) Int. Cl.: A01G 9/02, A01G 27/00, A01G 31/00, A01G 9/00, A01G 27/02, A01G 27/06

(54) **PLANT CULTIVATION DEVICE AND PLANT CULTIVATION VESSEL**
PFLANZENANBAUWERKZEUG UND PFLANZENZUCHTGEFÄSS
OUTIL ET CUVE DE CULTURE DE PLANTES

(30) Priority: 28.09.2001 JP 2001302965
(43) Date of publication of application: 23.06.2004
(73) Proprietor: Suntory Holdings Limited, Kita-ku, Osaka-shi, Osaka 530-8203 (JP)
(72) Inventor: ISEKI, Kyoko, Nagaokakyo-shi, Kyoto 617-0837 (JP); HASHIMOTO, Masaki, Ibaraki-shi, Osaka 567-0835 (JP); MIYAGAWA, Katsuro, Takatsuki-shi, Osaka 569-1121 (JP)
(74) Representative: Lemcke, Brommer & Partner
(86) International application number: PCT/JP2002/009903
(87) International publication number: WO 2003/028439

(56) References cited:
- CA-A1- 2 092 485
- FR-A1- 2 686 769
- FR-A1- 2 816 167
- JP-A- 9 131 136
- JP-A- 9 131 136
- JP-A- 10 276 598
- JP-A- 52 131 854
- JP-A- 2000 188 959
- JP-A- 2000 188 959
- JP-A- 2002 119 158
- JP-U- 5 091 303
- NL-C1- 1 011 346
- US-A- 4 926 584
- US-B1- 6 253 487

## Description

### Technical Field

This invention relates a plant cultivating device and vessel for horticulture of plant or the like.

### Background Art

First, conventional method, device and vessel for cultivating a plant will be described.

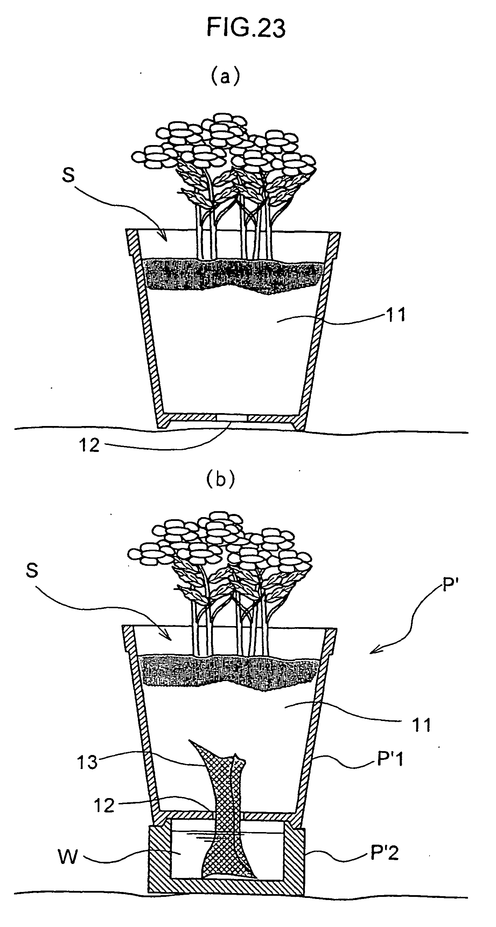

Conventionally, in this type of horticultural technique, in general, as shown in Fig. 23 (a), there is often employed a device having an accommodating section S capable of receiving from the above and accommodating therein a medium 11 such as soil, sand or the like and a plant etc. and a water drain hole 12 formed in the bottom face thereof. However, when water is supplied from the above to the plant or the like planted in the receiving section S, all water in excess of the water holding capacity of the medium 11 will be drained from the drain hole 12. Hence, water needs to be supplied regularly and frequently.

In view of the above, there has been proposed a technique using a plant cultivating device P' as shown in Fig. 23 (b). This plant cultivating device P' consists of an upper body P'1 having an accommodating section S capable of accommodating therein a medium 11 such as soil, sand or the like and a lower body P2 attachable to the bottom of the upper body P'1 and capable of reserving water W therein. As shown, in a water drain hole 12 formed in the bottom of the upper body P'1, there is inserted a water-absorbent member 13 formed of e.g. non-woven fabric so as to allow supply of the water W reserved in the lower body P'2 into the upper body P'1, with one end portion of the water-absorbent member 13 being inserted into the medium 11 present inside the upper body P'1 and with the other end of the member 13 being submerged in the water W present in the lower body P'2, such that the water may be automatically supplied to the medium 11 due to the absorptive suction of the water W by the water-absorbent member 13.

However, with such plant cultivating device as shown in Fig. 23 (b), although watering can be done automatically, when the amount of water W reserved in the lower body P'2 has diminished, resulting in lowering of its liquid level, the efficiency of the absorptive suction of water by the water-absorbent member 13 is reduced correspondingly. Or, as the watering depends on the capillary phenomenon in the water-absorbent member 13, the efficiency of the absorptive suction of water can be affected by clog-up or deterioration in the water-absorbent member 13, whereby the automatic water supply cannot be provided in a stable manner.

Besides the above mentioned state of art JP-A-2000 188959 discloses cultivating a plant in a plant cultivating basis accommodated in a plant cultivating vessel which is accommodated in a water reservoir vessel reserving water therein, wherein the plant cultivating basis is accommodated in the cultivating vessel and then the cultivating vessel is floated within the reservoir vessel for allowing water supply to the plant by an absorption cloth. The cultivating vessel is constructed such that when accommodating the cultivating basis member therein it can float on water.

Further US-A-4926584 discloses cultivating a plant in a plant cultivating vessel without any plant bed material. This vessel is accommodated in a water reservoir vessel reserving water therein, wherein the cultivating vessel is floated within the reservoir vessel for allowing water supply to the plant through a water inlet hole formed in a bottom of the cultivating vessel.

The present invention has been made in view of the above-described state of the art. The object of the invention is to provide a plant cultivating device and vessel which can provide automatic watering in a stable manner and which also can effect this automatic watering in such a manner as needed in accordance with growth of the plant, thereby to allow easy and convenient cultivation of a plant.

### Disclosure of the Invention

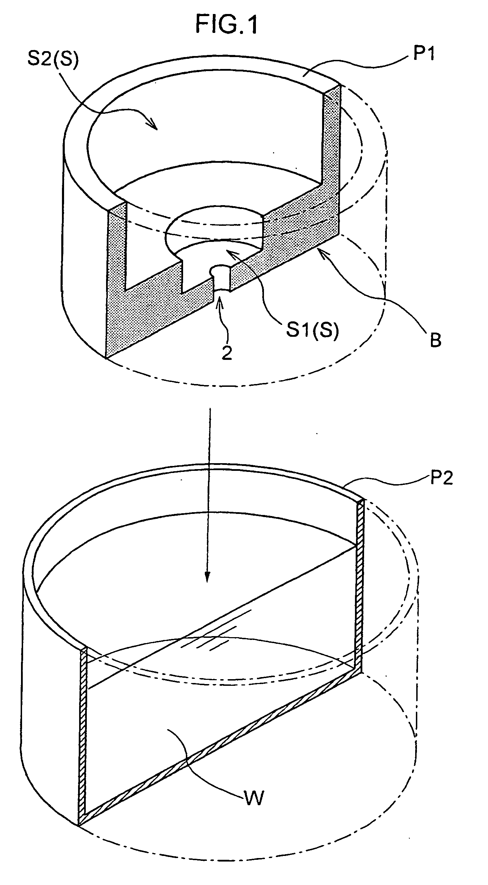

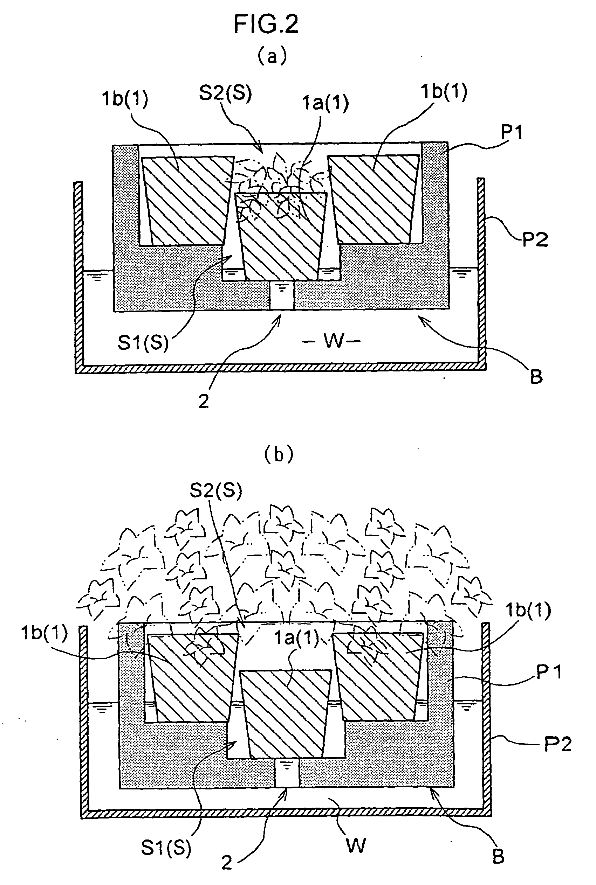

According to the invention set forth in claim 1, as illustrated in Figs. 1 and 2, there are provided a plant cultivating vessel P1 for accommodating therein a plant cultivating bed material (1a, 1b) allowing growth of root of plant therein and a water reservoir vessel P2 capable of accommodating therein the plant cultivating vessel P1 and capable also of reserving water W therein. The plant cultivating vessel P1 is constructed such that the vessel P1 with the plant cultivating bed material 1 accommodated therein can float on the water W and the vessel P1 has a water inlet hole 2 in a bottom B thereof for allowing introduction of the water W from the outside to the inside of the vessel P1 while keeping the vessel P1 afloat on the water W.

Thereby as illustrated in Fig. 2, the plant cultivating vessel P1 is constructed such that the vessel will sink in the water W by a variable depth according to increase in the load of contents in the vessel.

According to the invention the plant cultivating vessel P1 includes at least one water inlet hole 2 in the bottom B thereof and this bottom of the plant cultivating vessel P1 has an inner face which is formed higher at an outer area thereof than its area including the water inlet hole 2.

With increase in the sinking depth of the plant cultivating vessel, the surface area of the water flooded into the plant cultivating vessel increases and is extended from the area including the water inlet hole to the outer area higher than the former. On the other hand, as described above, the sinking depth of the plant cultivating vessel is increased with increase in the load of its contents associated with growth of the plant.

Therefore, with the above construction, the surface area of the water flooded into the vessel is increased in association with growth of the plant. Then, for example, at an initial stage of cultivation, if a plant cultivating bed material planting a seed or a nursery stub of a plant is disposed at the lower center area and a plant cultivating bed material without any such seed or nursery stub of a plant planted therein is disposed at the higher outer area, at the earlier stage when the sinking depth of the plant cultivating vessel is still small, water will be supplied to the plant cultivating bed material disposed at the lower area and having a seed or a nursery stub of a plant planted therein. Subsequently, as the root of the plant is extended over a greater area within the plant cultivating bed material with growth of the plant, the water will be supplied automatically to a correspondingly greater area of the plant cultivating bed material. As a result, the water supplying operation may be effected automatically with well-balanced demand and supply, restricting occurrence of e.g. root rot.

With this construction, for instance, the plant cultivating bed material planting a seed or a nursery stub of a plant is accommodated in the plant cultivating vessel and water is reserved in the water reservoir vessel. Then, when the plant cultivating vessel is put into this water reservoir vessel reserving water therein, the introduced plant cultivating vessel will maintain its floating condition with a bottom portion thereof being submerged by a predetermined depth in the water reserved in the water reservoir vessel and at the same time the water reserved in the water reservoir vessel will flow into the plant cultivating vessel through the water inlet hole formed in the bottom thereof. With this, this amount of water flown into the plant cultivating vessel will be absorbed by the plant cultivating bed material accommodated in the plant cultivating vessel and then supplied to the plant or the like. In this way, the watering operation is carried out automatically.

As the water supply is effected by the above-described function, water can be supplied as the water reserved in the water reservoir vessel flows into the plant cultivating vessel through the water inlet hole. Hence, the watering operation can be carried out automatically and stably until exhaustion of the water reserved in the water reservoir vessel.

Therefore, the water supply can be carried out automatically and stably and also water can be supplied automatically by an amount as needed with the growth of the plant. Consequently, plant can be cultivated easily and conveniently. Further, in comparison with water supply by sprinkling, loss of e.g. compost or the like to the outside can be avoided, thereby to avoid damage to the surrounding environment.

With growth of a plant, the amount of water transpiration therefrom increases, thus requiring increased water supply. Then, with the above-described construction, when the plant cultivated in the plant cultivating vessel has grown, resulting in increased dead weight of the plant, the sinking depth of the plant cultivating vessel is varied, e.g. increased, accordingly. With this, the water level of the water entered the plant cultivating vessel is elevated, thereby to enable automatic increase in the amount of water supplied according to the growth of the plant.

Further, in general, a plant extends upwards with its growth. Then, as proposed by the above-described construction, the sinking depth of the plant cultivating vessel is increased with the increase in the load associated with the growth of plant, thereby to restrict rising of its center of gravity, so that the posture of the plant cultivating vessel may be stabilized and the water supply can be effected stably and automatically for an extended period of time.

According to an other feature set forth in claim 1, as illustrated in Figs. 1, 2, 5, 7, 8, 9 and 13, for forming the outer area of the inner face of the bottom of the plant cultivating vessel P1 higher the area thereof including the water inlet hole 2, the inner face of the bottom of the plant cultivating vessel P1 is provided as a stepped face.

### [function and effect]

With this construction, the sinking depth can be varied in association with increase in the load of the contents, whereby the water supplying operation may be effected automatically with well-balanced demand and supply. In addition, as the inner face of the bottom of the plant cultivating vessel is provided as a stepped face, for instance, in case the plant cultivating bed material is a molded member in the form of a block, this plant cultivating bed material can be easily set within the plant cultivating vessel in a stable manner, thus providing advantage of convenience.

According to an invention set forth in claim 2, the plant cultivating vessel P1 includes a plurality of water inlet holes 2 in the bottom B and the bottom of the plant cultivating vessel P1 has an inner face which is formed higher at an outer area thereof than its area including the water inlet holes 2.

### [function and effect]

With increase in the sinking depth of the plant cultivating vessel, the surface area of the water flooded into the plant cultivating vessel increases and is extended from the area including the water inlet holes to the outer area higher than the former. On the other hand, as described above, the sinking depth of the plant cultivating vessel is increased with increase in the load of its contents associated with growth of the plant.

Therefore, with the above construction, the surface area of the water flooded into the vessel is increased in association with growth of the plant. Then, for example, at an initial stage of cultivation, if a plant cultivating bed material planting a seed or a nursery stub of a plant is disposed at the lower area including the water inlet hole and a plant cultivating bed material without any seed or nursery stub of a plant planted therein is disposed at the higher outer area, at the earlier stage when the sinking depth of the plant cultivating vessel is still small, water will be supplied to the plant cultivating bed material disposed at the lower area and having a seed or a nursery stub of a plant planted therein. Subsequently, as the root of the plant is extended over a greater area within the plant cultivating bed material with growth of the plant, the water will be supplied automatically to a correspondingly greater area of the plant cultivating bed material. As a result, the water supplying operation may be effected automatically with well-balanced demand and supply, restricting occurrence of e.g. root rot.

Moreover, as a plurality of water inlet holes are provided, the water supply through the water inlet holes can be effected in a stable manner.

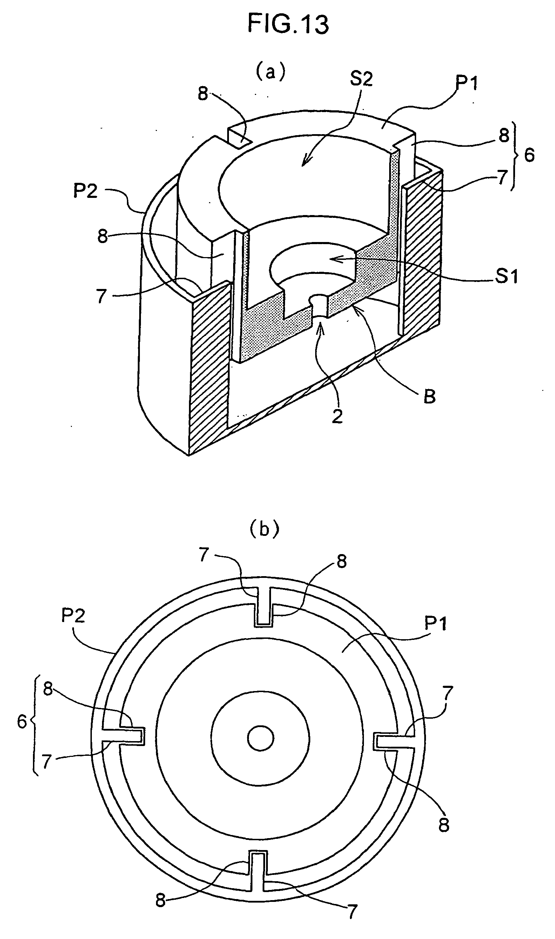

According to an invention set forth in claim 3, as illustrated in Fig. 13, the plant cultivating vessel P1 and the water reservoir vessel P2 each includes a guide mechanism 6 (7, 8) for allowing vertical displacement of the plant cultivating vessel P1 and stabilizing the posture thereof when the plant cultivating vessel P1 is accommodated inside the water reservoir vessel P2.

### [Function and effect]

With provision of the guide mechanism described above, when the plant cultivating vessel sinks into the water while being kept afloat therein, this sinking displacement can take place with the vessel being maintained at a stable posture. That is, the plant cultivating vessel will not assume an inclined posture inclined to one side. Rather, the entire vessel will be allowed to sink uniformly from the bottom side thereof. Consequently, the automatic water supplying operation may take place even more stably and uniformly. Incidentally, the guide mechanism may be adapted for restricting self rotation of the plant cultivating vessel within the water reservoir vessel. Further, there may be provided a mechanism for preventing complete submergence of the plant cultivating vessel in the water present within the water reservoir vessel.

Incidentally, although reference marks are provided in the above description for facilitating reference to the accompanying drawings, it is understood that the provision of the marks is not to limit the scope of the invention to the constructions shown in the drawings.

### Brief Description of the Drawings

Fig. 1 is an explanatory view showing one embodiment of the present invention,
Fig. 2 is an explanatory view showing one embodiment of the present invention,
Fig. 3 is an explanatory section view showing shapes of vessels PA, PB, PC used in Experiment 1,
Fig. 4 is an explanatory view relating to results of Experiment 1,
Fig. 5 is an explanatory section view showing shapes of vessels I,II and III used in Experiment 2,
Fig. 6 is an explanatory view relating to results of Experiment 2,
Fig. 7 is an explanatory view showing a further embodiment of a plant cultivating vessel,
Fig. 8 is an explanatory view showing a further embodiment of a plant cultivating vessel,
Fig. 9 is an explanatory view showing a further embodiment of a plant cultivating vessel,
Fig. 10 is an explanatory view showing a further embodiment of a plant cultivating vessel,
Fig. 11 is an explanatory view showing a further embodiment of a plant cultivating vessel,
Fig. 12 is an explanatory view showing a further embodiment of a plant cultivating vessel,
Fig. 13 is an explanatory view showing a further embodiment of the present invention,
Fig. 14 is an explanatory view showing a further embodiment of a plant cultivating bed material,
Fig. 15 is an explanatory view showing a further embodiment of a plant cultivating bed material,
Fig. 16 is an explanatory view showing a further embodiment of a plant cultivating bed material,
Fig. 17 is a perspective view of a plant cultivating device,
Fig. 18 is a plan view of the plant cultivating device,
Fig. 19 is an exploded perspective view of the plant cultivating device,
Fig. 20 is a plan view of Example 2,
Fig. 21 is a plan view of Example 3,
Fig. 22 is a plan view of Example 5, and
Fig. 23 is an explanatory view illustrating the prior art.

### Best Mode of Embodying the Invention

Next, embodiments of the present invention will be described with reference to the accompanying drawings. In the figures, members and elements denoted with identical marks as used in the prior art are identical or equivalent members or elements.

Figs. 1 and 2 show one embodiment of the present invention.

As shown in Fig. 1, a plant cultivating device relating to the present invention includes a plant cultivating vessel P1 for accommodating a plant cultivating bed material 1 allowing growth of root of a plant and a water reservoir vessel P2 capable of accommodating therein the plant cultivating vessel P1 and capable also of reserving water W. As shown in Figs. 1 and 2, the plant cultivating vessel P1 accommodating therein the plant cultivating bed material 1 is disposed within the water reservoir vessel P2 reserving water W therein, so that the plant cultivating vessel P1 is floated on the water W reserved in the water reservoir vessel P2. With maintaining this floating posture, the water W can be introduced through a water inlet hoe 2 into the plant cultivating vessel P1 for cultivating and growing a plant or the like.

First, the constructions of the plant cultivating vessel P1 and the water reservoir vessel P2 will be described in details.

The plant cultivating vessel P1 comprises a bottom-equipped vessel including an accommodating space S for accommodating the plant cultivating bed material 1 therein and a bottom B. Further, in this bottom B, there is formed the water inlet hole 2 for allowing intrusion of water from the outside of the plant cultivating vessel P1 into the interior thereof. So that, this vessel P1 with accommodating the plant cultivating bed material 1 therein can float in the water and also as the load of its contents increases with growth of the plant, the amount of its sinking into the water is varied correspondingly.

In this embodiment, the plant cultivating vessel P1, as shown, has a cylindrical outer shape and as for its inner radial shape, the inner face of the bottom B is formed as a stepped face so as to present a reversed convex cross section, so that this inner face of the bottom B has an outer area formed higher than a central area (an example of the area including the water inlet hole 2). Hence, the accommodating space S consists of a small diameter cylindrical space S1 and a large diameter cylindrical space S2 larger in diameter than the cylindrical space S1. Further, the water inlet hole 2 is provided at substantially center of the bottom B. And, in this embodiment, the plant cultivating vessel P1 is made of polystyrene foam which has a specific weight smaller than water. Specifically, this plant cultivating vessel P1 has a mass of about 30g and dimensions of an outer diameter of 200mm, an outer height of 150 mm, with the cylindrical space S1 having an inner diameter of 70 mm and a height from the outer face of the bottom B of 15 mm, the cylindrical space S2 having an inner diameter of 170 mm and a height from the outer face of the bottom B of 35 mm, the water inlet hole 2 having an inner diameter of 15 mm.

Incidentally, the plant cultivating vessel P1 may be constructed in any other manner as long as it can float in the water. It can be formed of any other material having a specific weight smaller than water (e.g. various resin foams, wood or ceramics, etc.) Or, it can be a hollow structure as well. Further, it is not limited to the integrally molded product, but, needless to say, it can be rendered floatable on water with attachment of a float thereto. Moreover, the size and the shape thereof are not particularly limited. Such factors can be appropriately chosen with consideration to the type of the plant cultivating bed material to be accommodated therein, or the number of the bed materials or the buoyancy required by the load of its contents.

The size and shape of the water inlet hole 2 are not particularly limited. In order not to present difficulty in the placement of the plant cultivating bed material 1, the hole can be about 2 to 20 mm, particularly preferably about 10 to 15 mm. Further, at the water inlet hole 2, it is possible to provide a thin plate or the like formed of water permeable material having micro pores, such as a root-protecting sheet or a ceramic plate, for preventing leak of the root from the plant cultivating vessel P1 into the water W.

The plant cultivating bed material 1 can be any solid medium capable of cultivating and growing a plant. For instance, it can be selected appropriately not only from such media comprising ordinary soil such as "Akadama" soil, "Kanuma" soil, pumice stone, leaf mold, but also from artificial media such as of vermiculite, or pearlite, or various resin foams of urethane, or phenol, or rock wool or "Hydroball" (clay ball). Its shape is not limited to the block type shown in the figure, but it can be in the form of sand, particles, grains, etc. In case medium in the form of sand or particles or grains is to be employed, for its use, this medium can be put into a mesh bag or the like capable of preventing leak of the medium therefrom.

Further, if the plant cultivating bed material 1 is constructed in the form of a block which allows intrusion and subsequent growth of the root of the plant therein and which per se is elastically deformable and has air permeability and water permeability, even when the plant is cultivated as being submerged in water to be described later, the plant can be cultivated effectively without occurrence of e.g. root rot. One example thereof is artificial porous and elastic plant cultivating soil comprising bark or peat in combination with such binder as polyurethane polymer (see Japanese Patent Application "Kokai" No. 51-27545, Japanese Patent Application "Kokoku" No. 56-18165, Japanese Patent Application "Kokai" No. 58-198516, U.S.P. No. 4034508, USP No. 4175355).

On the other hand, the only requirement of the water reservoir vessel P2 is the ability of reserving water therein. This can be formed of any material such as resin, wood, metal, ceramics, etc. Needless to say, the water reservoir vessel P2 can reserve not only water, but also water and liquefied fertilizer, or liquefied fertilizer. Further, its size and shape are not particularly limited, but they can be appropriately selected with consideration to e.g. the size and shape of the plant cultivating vessel P1 to be accommodated therein and/or the amount of water to be reserved therein.

In this embodiment, as one example, the water reservoir vessel P2 is provided as a cylindrical vessel having a bottom which has a horizontally oriented like cross section and capable of reserving 2-3 liters of water or liquefied fertilizer.

Next, an exemplary use of the plant cultivating device and the plant cultivating vessel having the above-described respective constructions will be described with reference to Fig. 2.
1) First, the plant cultivating bed materials 1 are accommodated within the plant cultivating vessel P1. In the plant cultivating bed material 1, there is planted a nursery of plant (or seed or sprout thereof) in advance (Fig. 2 (a)).
   In the present embodiment, the plant cultivating bed material 1 employed comprises a block like member and as described hereinbefore, a plant cultivating bed material 1a planting a nursery plant therein is disposed at the center area of the bottom B lower than the rest thereof and plant cultivating bed materials 1b without any nursery plant planted therein are disposed at the outer areas higher than the center area.
2) Then, ① water W is reserved in advance in the water reservoir vessel P2 and in this water reservoir vessel P2, the plant cultivating vessel P1 accommodating therein the plant cultivating bed materials 1 in the manner described above is placed. Alternatively, ② after the plant cultivating vessel P1 accommodating therein the plant cultivating bed materials 1 is placed in the water reservoir vessel P2, water W is introduced and reserved in the water reservoir vessel P2.

With the above, as shown in Fig. 2 (a), due to the load of the contents (in this embodiment, the plant and the plant cultivating bed materials 1) within the plant cultivating vessel P1, the plant cultivating vessel P1 will be submerged to a certain extent into the water W present in the water reservoir vessel P2 and this water W will flood through the water inlet hole 2 into the plant cultivating vessel P1, whereby the water or the like may be supplied to the plant cultivating bed materials 1 and consequently to the plant.

In this embodiment, as described hereinbefore, in the inner face of the bottom B of the plant cultivating vessel P1, its outer area is formed higher than its center area including the water inlet hole 2. Hence, the surface area of the water introduced into the plant cultivating vessel P1 will increase with increase of the sinking amount of the plant cultivating vessel P1. On the other hand, the sinking amount of the plant cultivating vessel P1 increases with increase in the load of its contents associated with growth of the plant. Therefore, with this construction, as shown in Fig. 2 (b), as the surface area of the water introduced increases in association with growth of the plant, water can be supplied automatically to the plant cultivating bed materials 1 over larger areas thereof in association with extension of the root of the plant resulting from growth thereof. Consequently, it is possible to readily effect the water supplying operation with well-balanced demand and supply.

### (experiments)

As the plant cultivating vessel P1, various shapes of vessels were made and their sinking amounts into water and so on were investigated. The results will be discussed next.

### ○ Experiment 1

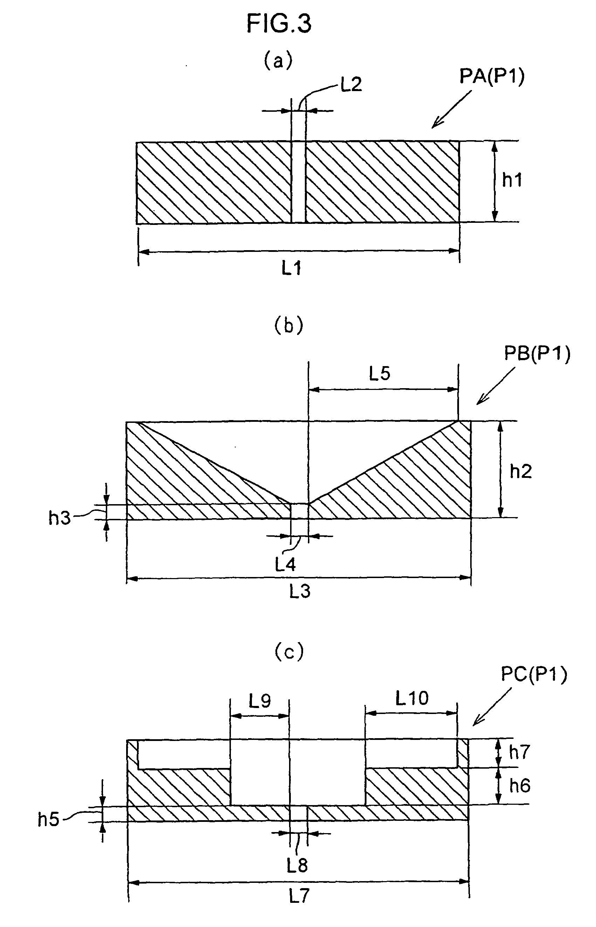

Sample vessels PA, PB, PC having three kinds of bottom shapes shown in Fig. 3 (corresponding to Fig. 3 (a), (b), (c) in said order) having a predetermined volume were made. And, they were floated on the water. Then, by using a tension meter, the sinking depths (heights measured from the bottom faces to the water level) of the vessels with application of increasing load thereto from their upper portions (from the inside of the plant cultivating vessels, simulating increasing weight associated with growth of a plant) were determined by using a ruler.

From the underwater depths resulting from the loads, the water-flooded areas corresponding respectively to the underwater depths were determined in the manner described below. Incidentally, the weights of the respective vessels PA, PB,PC were 17.1g, 17.4g and 17.7g.

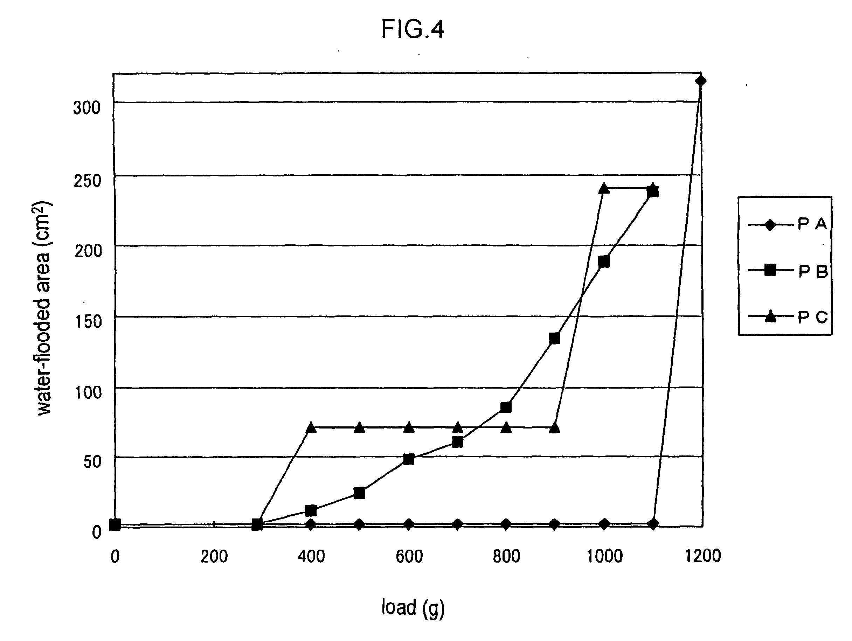

For the vessel PA, a relational expression: water flooded area = [radius (L2 ÷2)² × 3.14] when the underwater depth is blow h1 and a relational expression: water flooded area = [radius (L1 ÷2)² × 3.14] when the underwater depth is above h1 were obtained. For the vessel PB, a relational expression: water flooded area = [radius (L4 ÷2)² × 3.14] when the underwater depth is blow h3 and a relational expression: water flooded area = [radius (L5 ÷2)² × 3.14] when the underwater depth is above h3 were obtained. And, the respective water-flooded areas thereof were obtained by substituting the respective underwater depths thereof for X in the expressions. For the vessel PC, a relational expression: water flooded area = [radius (L8 ÷2)² × 3.14] when the underwater depth is blow h5, a relational expression: water flooded area = [(L9+L8 ÷2)² × 3.14] when the underwater depth is above h5 and blow (h5+h6), and a relational expression: water flooded area = [(L10+L9+L8 ÷2)² × 3.14] when the underwater depth is above (h5 + h6), were obtained. The results are shown in Fig. 4.

As can be seen in Fig. 4, in accordance with the shape of the plant cultivating vessel P1, with increase in the load thereof associated with growth of the plant, the rate of change (rate of increase) in the sinking depth (=the underwater level inside the plant cultivating vessel P1) can be appropriately set.

### ○ Experiment 2

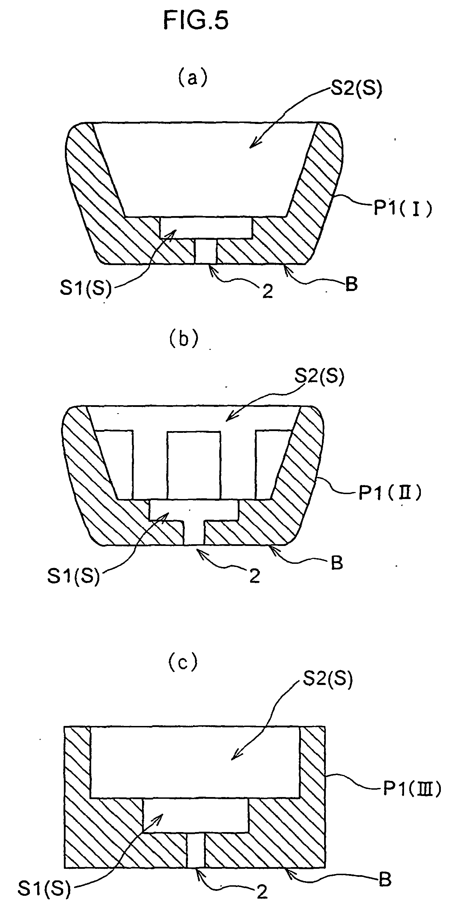

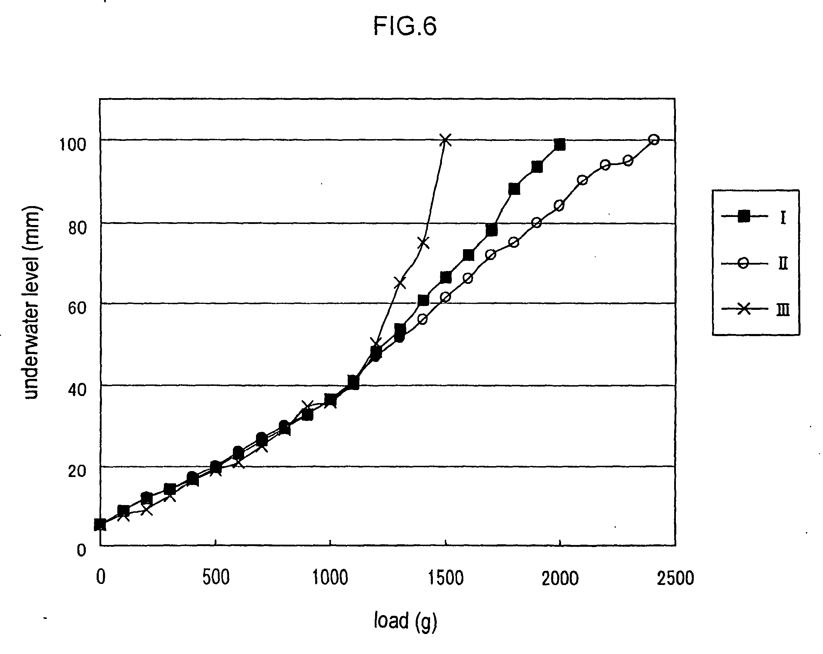

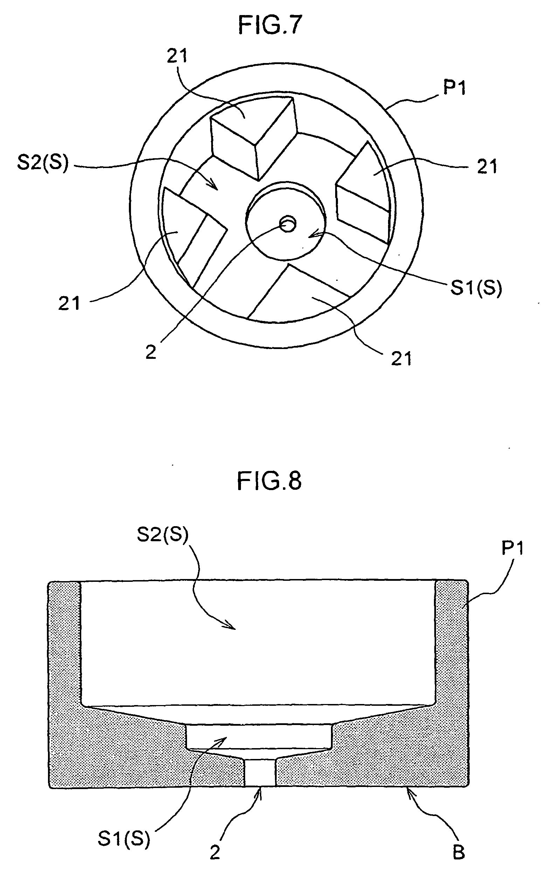

As the plant cultivating vessels, for three kinds of vessels I, II, III having a bottom shown in Fig. 5 (corresponding to Fig. 5 (a), (b), (c) in said order, each having a weight of about 39g), the same experiment as Experiment 1 was conducted to obtain the relationship between the load and the underwater level. Incidentally, with all of the vessels I, II, III, the inner face of the bottom of the vessel has a stepped shape and the volumes of the vessels I, II, III were varied so that the vessel III obtained the greatest buoyancy, the vessel I obtained the second greatest buoyancy and the vessel II obtained the smallest buoyancy. The results of the experiment are shown in Fig. 6. Incidentally, respecting the shape of the vessel II, as shown in the perspective view of Fig. 7, the vessel includes a block-like float section 21 in the large-diameter cylindrical space S2 so as to obtain the additional buoyancy compared to the others (the vessels I, III shown in Figs. (a), (c)). As can be seen from this result too, in accordance with the shape of the plant cultivating vessel P1, with increase in the load thereof associated with growth of the plant, the rate of change (rate of increase) in the sinking depth (=the underwater level inside the plant cultivating vessel P1) can be appropriately set. In addition, it can also be seen that the adjustment is possible so as to avoid sudden increase in the sinking of the vessel when the load has increased due to growth of the plant.

### [other embodiments]

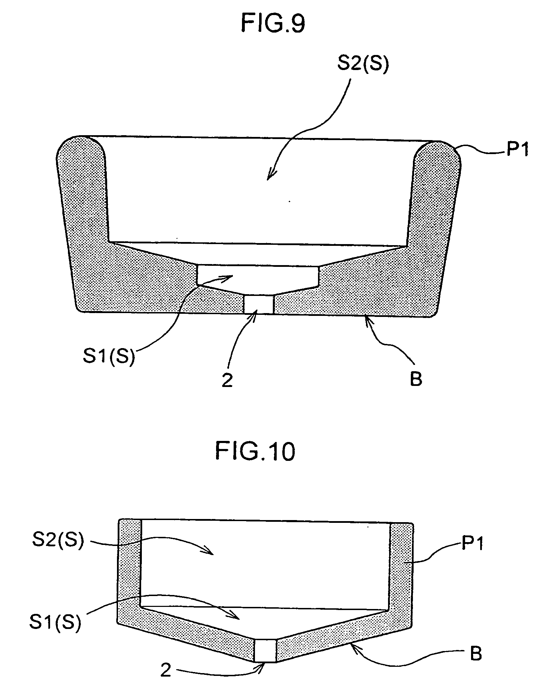

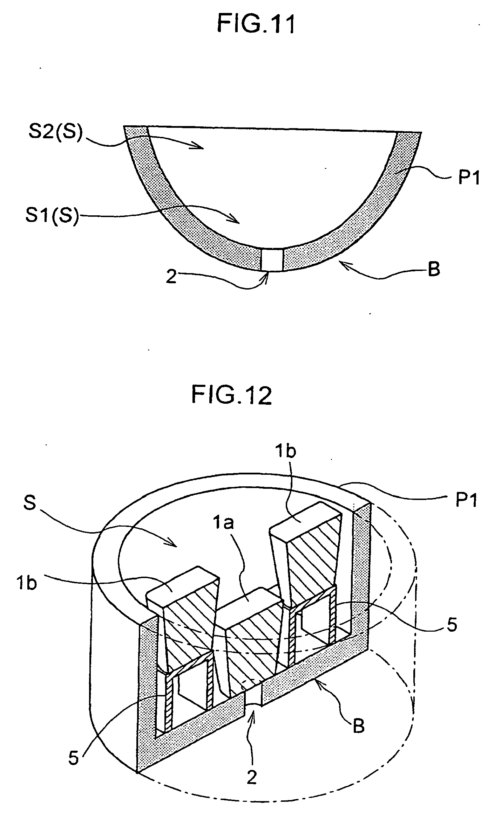

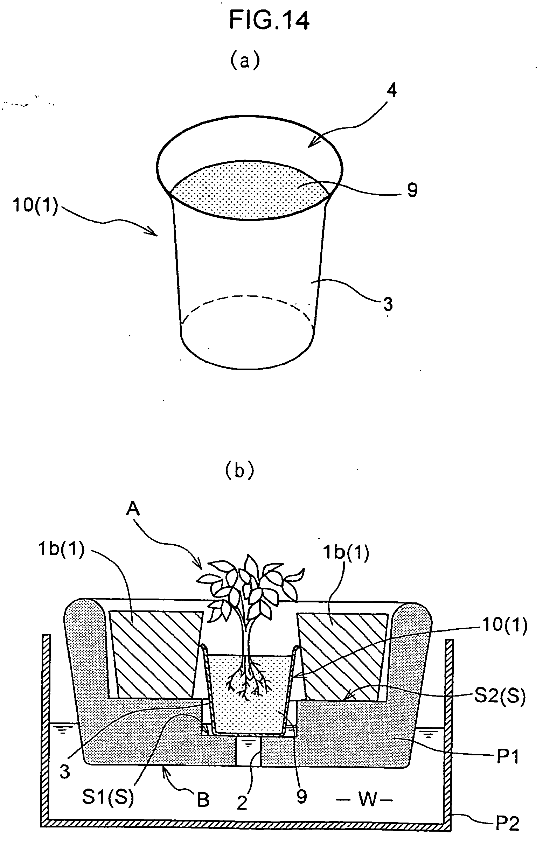

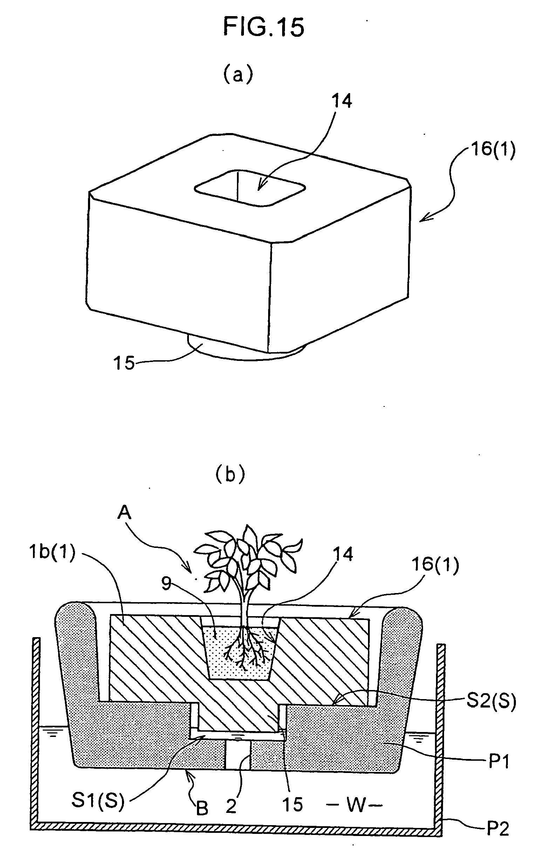

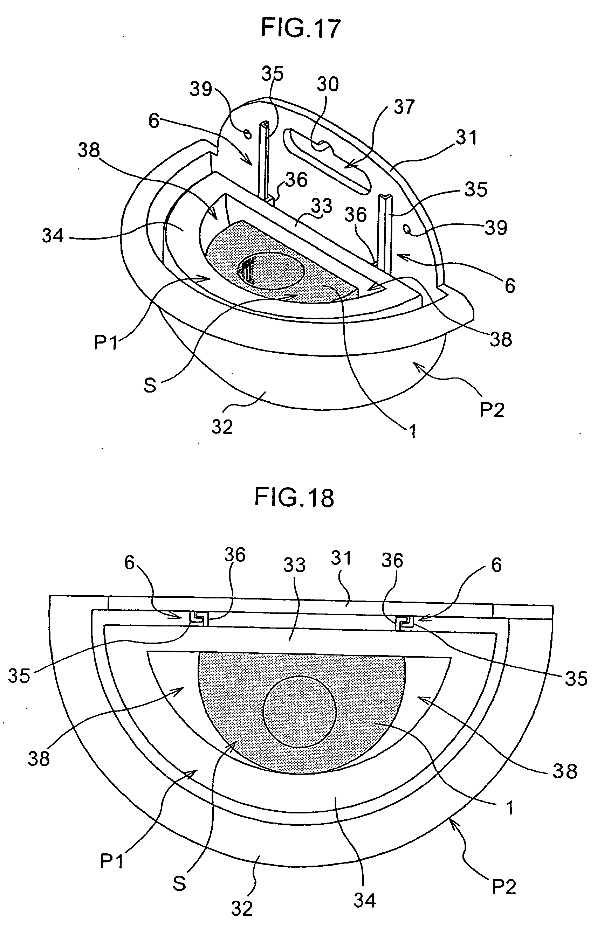

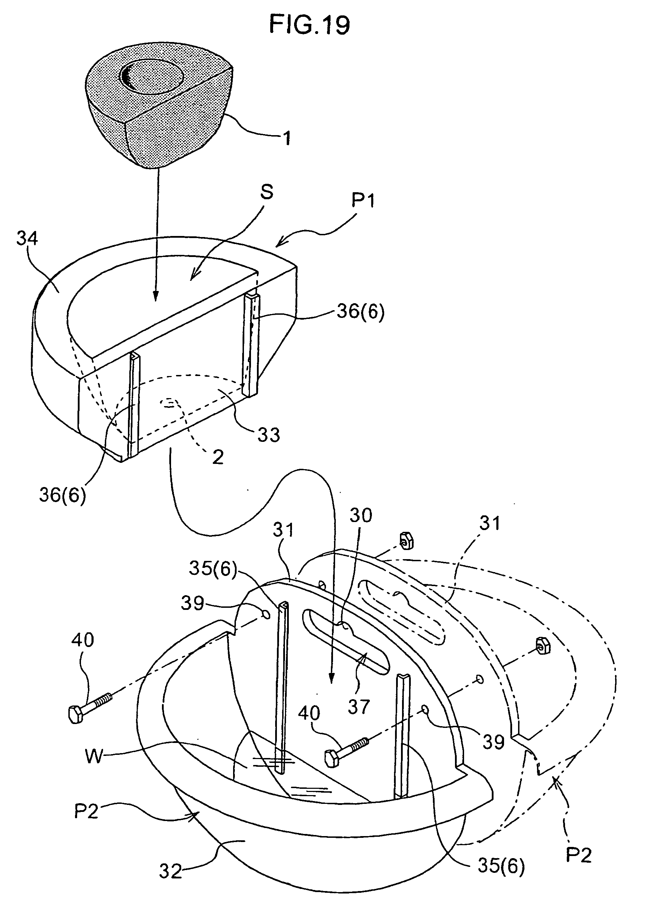

Next, other embodiments will be described.
<1> In the foregoing embodiment, the shape of the inner bottoms of the cylindrical shape S1 and the cylindrical shape S2 constituting the accommodating space S of the plant cultivating vessel P1 is formed substantially flat. The shape is not limited thereto. Instead, as shown in Fig. 8, it can be tapered from the upper portion to the lower portion. In this case, it becomes possible to avoid risk of water congestion at the corners of the respective cylindrical spaces S1, S2, thereby to allow smooth water supply.
**<2>** In the foregoing embodiment, in order to form the outer area of the inner face of the bottom B of the plant cultivating vessel P1 higher than the center area thereof, the inner face of this bottom B has a stepped shape. Instead, as shown in Fig. 10 for example, it can be formed as a reversed conical shape tapered downwards. Further alternatively, as shown in Fig. 11, it can be formed as a concave face. Or, as shown in Fig. 12, a beam portion 5 may be provided therein for increasing the height of a portion of the outer area relative to that of the center area.
**<3>** Further, the horizontal cross sectional shape of the bottom B of the plant cultivating vessel P1 is not limited to the circular shape, but can be an oval shape or various kinds of polygonal shapes.
**<4>** And, in the foregoing embodiment, the outer shape of the plant cultivating vessel P1 has a substantially identical diameter along the vertical direction. Instead, the outer shape of the plant cultivating vessel P1 may be such that its diameter varies along the vertical direction (for instance, shapes shown in Figs. 10 and 11).
   In this case, by appropriately varying the rate of change in the sinking amount (water level) associated with increase in the load of the contents of the plant cultivating vessel P1 in accordance with this outer shape, water supplying operation can be effected automatically according to the kind of the plant.
**<5>** In the foregoing embodiment, the rate of change in the sinking amount (water level) associated with increase in the load of the contents of the plant cultivating vessel P1 is varied by varying the outer or inner configuration of the plant cultivating vessel P1. The invention is not limited to such method of varying the shape. For instance, the rate of change in the sinking amount (water level) associated with increase in the load of the contents may be varied by forming the upper and lower portions of the plant cultivating vessel P1 per se of materials different from each other.
**<6>** The shape of the plant cultivating vessel P1 can be designed such that the upper portion of the plant cultivating vessel P1 obtains an excessive buoyancy which buoyancy can resist the load of fully grown plant. For instance, as shown in Fig. 9, this is possible by progressively increasing the width of the peripheral wall of the vessel toward the upper portion of the vessel.
**<7>** Further, the plant cultivating vessel and/or the water reservoir vessel may include a guide mechanism for allowing vertical displacement of the plant cultivating vessel and stabilizing the posture thereof when the plant cultivating vessel is accommodated inside the water reservoir vessel.
   As one example of such guide mechanism 6, as shown in Fig. 13 for instance, the inner periphery of the water reservoir vessel P2 may include a brim portion 7 extending along the vertical direction and the outer periphery of the plant cultivating vessel P1 may include a groove portion 8 extending also along the vertical direction into which the brim portion 7 can be engaged. Incidentally, by providing at least one pair, preferably more than two pairs of the brim portions 7 and the groove portions 8, it becomes possible to avoid the plant cultivating vessel P1 from assuming an unstable posture such as inclination thereof during the vertical displacement, so that the vessel can be stably maintained under the floating condition and also the sinking depth thereof into the water associated with plant growth can be increased.
**<8>** The water inlet hole 2 is provided for the purpose of allowing intrusion of water from the outside to the inside of the plant cultivating vessel P1. Its shape can be any such as a circular shape, an angular shape, etc. Incidentally, in the foregoing embodiment, the hole is formed in the bottom face of the bottom B. However, its position is not limited thereto. For instance, it can be provided at a portion in the lateral face adjacent the bottom face as long as it allows the plant cultivating vessel P1 accommodating the plant cultivating bed material 1 therein to float on the water while allowing intrusion of water from the outside to the inside.
**<9>** Incidentally, it is needless to say that the plant cultivating device relating to the present invention can be used like a pot or like a hanger pot.
**<10>** Fig. 14 shows a further embodiment of the plant cultivating bed material 1 to be accommodated within the plant cultivating vessel P1. As shown in Fig. 14 (a), a shape-retentive soil container 3 in the form of a cylinder equipped with a bottom is formed by pressing non-woven fabric having air permeability and cultivating soil 9 for cultivating plant is charged into this soil container 3 from its upper opening 4, thereby to form a plant cultivating bed material (to be referred to as "soil charged bed material") 10 (1) having water permeability, water holding ability as well as air permeability.
   Therefore, a so-called pot nursery plant A commonly available on the market comprising soil 9 and a plant planted therein can too be used for constituting the soil charged bed material 10 (1) by charging its soil 9 into the soil container 3. And, as shown in Fig. 14 (b), this soil charged bed material 10 (1) will be accommodated at the central small-diameter cylindrical space S1 of the plant cultivating vessel P1 and a plurality of plant cultivating bed materials 1b(1) in the form of blocks will be arranged and accommodated around the soil charged bed material 10 (1) within the large-diameter cylindrical space S2 of the vessel. Then, this plant cultivating vessel P1 may be floated inside the water reservoir vessel P2 for cultivating the plant planted in the soil 9.
**<11>** Fig. 15 shows a further embodiment of the plant cultivating bed material 1 to be accommodated within the plant cultivating vessel P1. As shown in Fig. 15 (a), this material is provided in the form of a block having a substantially square column having a substantially rectangular upward open cylindrical cavity 14 provided at substantially center thereof and a cylindrical projection 15 projecting downward at substantially center of the bottom, thereby to form a plant cultivating bed material (to be referred to as "soil charged block bed material") 16 (1) allowing charging of plant cultivating soil 9 in the cavity 14 and having water permeability, water holding ability as well as air permeability.
   Therefore, with the so-called pot nursery plant A commonly available on the market comprising soil 9 and a plant planted therein too, its soil 9 portion can be charged into the cavity 14. Then, as shown in Fig. 15 (b), this soil charged block bed material 16 (1) having its cavity 14 charged with the cultivating soil 9 will be accommodated in the large-diameter cylindrical space S2 of the plant cultivating vessel P1, with the projection 15 of the former being inserted into the central small-diameter cylindrical space S1 of the vessel. Then, this plant cultivating vessel P1 is floated within the water reservoir vessel P2 for allowing cultivation of the plant planted in the soil 9.

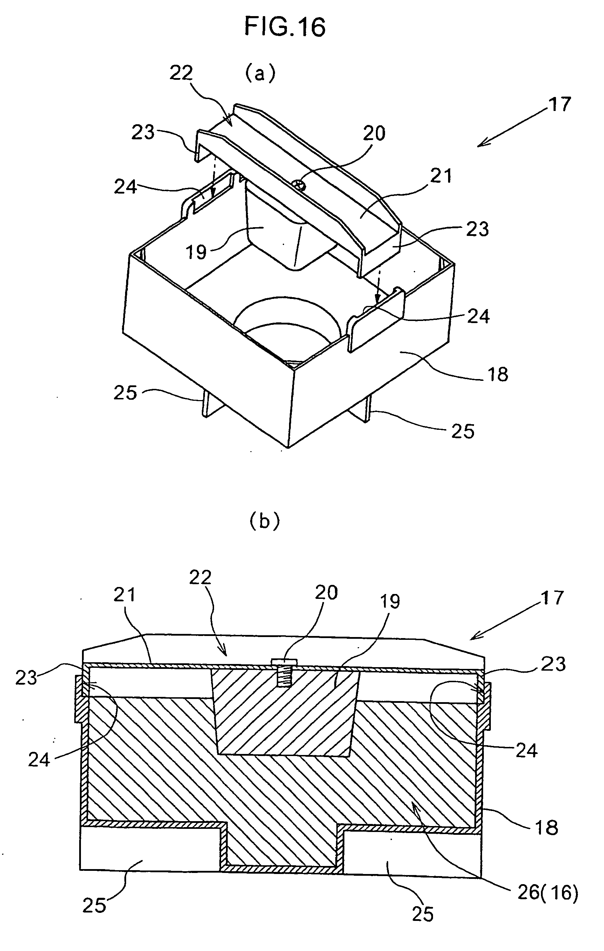

   Fig. 16 shows a shaper device 17 used in forming the above-described soil charged block bed material 16 (1). As shown in Fig. 16 (a), the device includes a female mold 18 made of resin in the form of a container having an inner face configuration corresponding to the outer face configuration of the soil charged block bed material 16 (1) and a male mold 22 including a core 19 made of resin and having an outer face configuration corresponding to the inner face configuration of the cavity 14 and detachably attached to a support arm 21 made of resin via a screw 20, with tongues23 extending downward from opposed ends of the support arm 21 being vertically detachably engageable with engaging grooves 24 formed at inner sides of upper edges of the female mold 18 and also with an outer face of the bottom of the female mold 18 integrally including four rib-like legs 25 acting also for reinforcement arranged substantially equidistantly in the peripheral direction, so as to allow stable mount of the device on e.g. a work table.
   And, as shown in Fig. 16 (b), the female mold 18 will be charged with a cultivating soil material 26 comprising mixture of a binder and soil material such as ordinary soil such as "Akadama" soil, "Kanuma" soil, pumice stone, leaf mold, or artificial media such as of vermiculite, or pearlite, or various resin foams of urethane, or phenol, or rock wool or "Hydroball" (clay ball). Then, the male mold 22 will be attached to the upper portion of the female mold 18, thereby to form the soil charged block bed material 16 (1) integrated with the cultivating soil material 26.
   Incidentally, the soil charged block bed material 16 (1) may be formed by charging the cultivating soil material 26 into the female mold 18 after this female mold 18 is attached to and assembled with the male mold 22.
   With the above-described shaper device 17, various shapes of cores 19 may be used to be fixed to the support arm 21. Therefore, it is readily possible to shape a soil charged block bed material 16 (1) having a cavity 14 of a desired shape and size to suit the size and type of the plant.
**<12>** Figs. 17-19 show a further embodiment of a plant cultivating method, a plant cultivating device and a plant cultivating vessel. In this, a plant cultivating vessel P1 in the form of a half pot and made of polystyrene foam is floated within a water reservoir vessel P2 in the form of a half pot and made of resin, so as to supply water to the plant through a water inlet hole 2 defined in the bottom face of the plant cultivating vessel P1.
   Referring to the water reservoir vessel P2, as shown in Fig. 19, on one side of a back plate portion 31, there is formed a peripheral wall portion 32 in the form of an arc having a progressively increasing diameter toward the upper side, so as to reserve plant cultivating water W therein. Further, the back plate portion 31 includes a horizontal elongate through hole 37 for allowing insertion of fingers, thereby to allow a user to carry the device by griping the back plate portion 31. Further, at the center of the upper peripheral edge of this horizontal elongate through hole 37, there is formed a constricted portion 30 for hooking on a wall or a shelf. Hence, the device is constructed as a wall-hung type construction which can be supported with its back plate portion 31 along the wall or the shelf.
   Referring to the plant cultivating vessel P1, on one side of its back plate portion 33, there is formed a hollow peripheral wall portion 34 in the form of an arc having a progressively increasing diameter toward the upper side, so that the vessel P1 can be floated within the water reservoir vessel P2 with the hollow back plate portion 33 of the former disposed along the back plate portion 31 of the water reservoir vessel P2 and within an accommodating space S inside it a plant cultivating bed material 1 is accommodated. Alternatively, the plant cultivating vessel P1 may be constructed as a hollow structure made of hard resin so that it can be floated inside the water reservoir vessel P2.
   The plant cultivating bed material 1 has a vertical height smaller than the depth of the accommodating space S and also the material 1 is constructed such that when accommodated within the accommodating space S, there are formed large gaps 38 on the right and left sides of the plant cultivating bed material 1.
   And, along the back plate portion 31 of the water reservoir vessel P2 and the hollow back plate portion 33 of the plant cultivating vessel P1, there is provided a guide mechanism 6 which allows vertical displacement of the plant cultivating vessel P1 when this vessel P1 is accommodated within the water reservoir vessel P2 and which also stabilizes the posture of this plant cultivating vessel P1. With this, even when the position of the center of gravity changes in association with growth of the plant, the posture of the plant cultivating vessel P1 can be maintained in a stable manner.
   The guide mechanism 6 includes a pair of right and left guide rails 35 integrally formed inwardly on the inner face of the back plate portion 31 of the water reservoir vessel P2, the guide rails 35 having an L-like cross sectional shape and vertically extending in parallel with each other and a pair of right and left guided members 36 integrally formed outwardly on the outer face of the hollow back plate portion 33 of the plant cultivating vessel P1, the guided members 36 having an L-like cross sectional shape and vertically extending in parallel with each other. Then, by inserting the pair of right and left guided members 36 between the pair of right and left guide rails 35 just like a hook, vertical displacement of the plant cultivating vessel P1 is allowed and at the same time the posture of this plant cultivating vessel P1 may be stabilized.
   Further, the back plate portion 31 further includes screw holes 39 in the right-to-left symmetry on opposed sides across the pair of right and left guide rails 35. Then, as illustrated by virtual lines in Fig. 19, two water reservoir vessels P2 may be assembled together with their back plate portions 31 being laid one over the other and then fixed together by means of connecting screws 40 inserted into the screw holes 39. With this, the plant cultivating vessels P1 planted with different kinds of plant are accommodated and floated in the respective water reservoir vessels P2, and the entire assembly can be supported in a suspended manner under a stable posture or can be placed on the ground surface or surface under a stable posture.
**<13>** With the plant cultivating method, plant cultivating device and plant cultivating vessel according to the present invention, e.g. a planter disposed on the road or in a park may be used as the water reservoir vessel and in this, one or a plurality of plant cultivating vessels accommodating the plant cultivating bed materials therein are floated, so that water may be supplied to the plant through the water inlet hole defined in the bottom of the plant cultivating vessel.
   In this case, for its transportation, since the plant cultivating vessel according to the invention can be stored with the plant being planted in the plant cultivating vessel, in effecting its maintenance for e.g. changing the plant for each season or for replacing weakened plant, each individual plant cultivating vessel may be replaced entirely with each plant, when necessary.
   Further, the maintenance can be easily carried out also when a number of water reservoir vessels are provided and the plant cultivating vessels are floated therein.
   Further, since it is possible to remove the weakened plant together with its plant cultivating vessel from the water reservoir vessel, the vessel can be easily transported to an environment suitable for the growth of the plant for its efficient cultivation.
<14> With the plant cultivating method, plant cultivating device and plant cultivating vessel according to the present invention, a pond, a lake, a sound or the like may be utilized as the water reservoir vessel. And, one or a plurality of plant cultivating vessels accommodating the plant cultivating bed material therein may be floated therein so that water may be supplied to the plant through the water inlet hole defined in the bottom face of the plant cultivating vessel.

### [Experiment Examples of Cultivation]

### Example 1

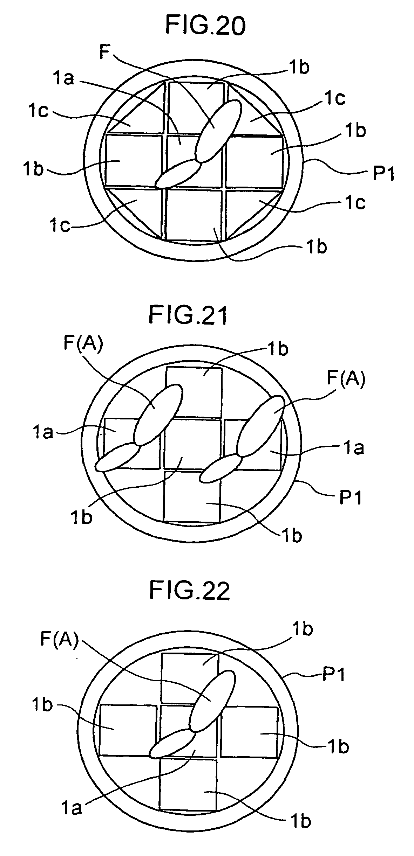

The water inlet hole 2 of the plant cultivating vessel P1 shown in Figs. 5 (a), (b) (c) and Fig. 22 was covered with a root-protecting sheet. In the cylindrical space S1 thereon, the block-like plant cultivating bed material 1a planting one stub of petunia F therein was placed. And, in the cylindrical space S2, four plant cultivating bed materials 1b without any plants planted therein were disposed in close contact with the plant cultivating bed material 1a with the petunia F planted therein. Then, this plant cultivating vessel P1 was floated within the water reservoir vessel P2 filled with 3 liters of water or liquefied fertilizer and plant cultivation was carried out for 3 months.

Incidentally, the plant cultivating bed material 1a having the petunia F planted therein was prepared by forming bark compost or peat moss in the form of a truncated conical block having a 7.5 cm squared rectangular upper end face, a circular lower end face having a diameter of 6 cm and a height of 6.5 cm and having a progressively decreasing diameter toward the lower end side thereof, with the block being integrally formed with a binder such as polyurethane.

### Example 2

The water inlet hole 2 of the plant cultivating vessel P1 shown in Fig. 5 (a) was covered with a root-protecting sheet. As shown in Fig. 20, the block-like plant cultivating bed material 1a described in Example 1 and planting one stub of petunia F therein was placed on this root-protecting sheet. And, in the cylindrical space S2, four plant cultivating bed materials 1b without any plants planted therein and four plant cultivating bed materials 1c each formed by cutting the square-column like block plant cultivating bed material 1b along one perpendicular plane including a diagonal line in a plan view were disposed. Then, with this plant cultivating vessel P1, plant cultivation was carried out for 3 months in the same manner as Example 1.

### Example 3

The water inlet hole 2 of the plant cultivating vessel P1 shown in Figs. 5 (a), (b) and Fig. 21 was covered with a root-protecting sheet. As shown in Fig. 21, the plant cultivating bed material 1b similar to the block-like plant cultivating bed material 1a described in Example 1 was placed on this root-protecting sheet. And, in the cylindrical space S2, two block-like plant cultivating bed materials 1a each having one stub of petunia F planted thereon and three block-like plant cultivating bed materials 1b without any plant planted therein were placed. Then, with this plant cultivating vessel P1, plant cultivation was carried out for 3 months in the same manner as Example 1.

### Example 4

In place of the two plant cultivating bed materials 1 having petunia F planted therein and placed in the plant cultivating vessel P1 described in Example 3, two plant cultivating bed materials 1a in which pot nursery plant A comprising the soil container 3 shown in Fig. 14 charged with cultivating soil 9 and planted with nursery flower F therein had been transplanted were placed in a plant cultivating vessel P1 substantially identical to the plant cultivating vessel P1 shown in Fig. 21. Then, this vessel P1 was floated within the water reservoir vessel P2 filled with 3 liters of 500 times or 1000 times diluted liquefied fertilizer and the cultivation was carried out for 2 months.

As the nursery flow F, petunia, verbena, torenia fournieri, fuchsia, nierembergia were used. The fertilizing was conducted by inserting three pieces of solid fertilizer per one plant cultivating bed material into a cavity formed in the non-planted block-like plant cultivating bed material 1b or by supplying 500 times or 1000 times diluted liquefied fertilizer.

### Example 5

The water inlet hole 2 of the plant cultivating vessel P1 shown in Fig. 5 (a) was covered with a root-protecting sheet. As shown in Fig. 22, on the cylindrical space S1 thereon, a block-like plant cultivating bed materials 1a in which pot nursery plant A comprising the soil container 3 shown in Fig. 14 charged with cultivating soil 9 and planted with nursery flower F therein had been transplanted was placed. And, in the cylindrical space S2 around the plant cultivating bed material 1a having the pot nursery plant A transplanted thereto, 3 to 4 non-planted block-like plant cultivating bed materials 1b were placed. Then, like Example 4, this plant cultivating vessel P1 was floated within the water reservoir vessel P2 filled with 3 liters of 500 times or 1000 times diluted liquefied fertilizer and the cultivation was carried out for 2 months.

As the nursery flow F, petunia, verbena, Torenia fournieri, fuchsia, nierembergia were used. The fertilizing was conducted by inserting three pieces of solid fertilizer per one plant cultivating bed material into a cavity formed in the non-planted block-like plant cultivating bed material 1b or by supplying 500 times or 1000 times diluted liquefied fertilizer.

Incidentally, the plant cultivating bed material 1a was prepared by forming bark compost or peat moss in the form of a truncated conical block having a 7.5 cm squared rectangular upper end face, a circular lower end face having a diameter of 6 cm and a height of 6.5 cm and having a progressively decreasing diameter toward the lower end side thereof, with the block being integrally formed with a binder such as polyurethane.

### Comparison Example

As a comparison example, into a planter pot No. 8 charged with 3 liters of commercially available soil, one stub of petunia which had been cultivated in the field soil was transplanted and cultivated. The cultivation was effected by two times of water sprinkling in the morning and later afternoon and one time per week of giving 500 times diluted liquefied fertilizer.

Conclusion: In all of the examples, flowering was observed earlier than field soil cultivation. And, during the cultivation period, vigorous plant growth without root rot or withering was observed. And, the supplement of the solution to the water reservoir vessel P2 was required only one time in one or two weeks during the earlier stage of the cultivation and only one time in three to four days even during the later stage of the cultivation, thus significantly reducing the frequency of watering compared with the field soil cultivation.

### Industrial Applicability

The present invention is useful for horticulture of plant, etc.

## Claims

1. A plant cultivating device including a plant cultivating vessel (P1) for accommodating a plant cultivatingmedium (1) therein and a water reservoir vessel (P2) capable of accommodating therein the plant cultivating vessel (P1) and capable also of reserving water (W) therein,
wherein the plant cultivating vessel (P1) is constructed such that the plant cultivating vessel (P1) when accommodating the plant cultivatingmedium (1) therein can float on the water and the plant cultivating vessel (P1) includes at least one water inlet hole (2) formed in a bottom (B) thereof so as to allow intrusion of water from the outside to the inside thereof under the floating condition,
the plant cultivating vessel (P1) is constructed such that the vessel will sink in the water (W) by a variable depth according to increase in the load of contents in the vessel. (P1), and
the bottom (B) of the plant cultivating vessel (P1) has an inner face which is formed higher at an outer area thereof than its area including the water inlet hole (2), and **characterized in that** for forming the outer area of the inner face of the bottom (B) of the plant cultivating vessel (P1) higher than the area thereof including the water inlet hole (2), the inner face of the bottom (B) of the plant cultivating vessel (P1) is provided as a stepped face.

2. The plant cultivating device according to claim 1,
**characterized in that**
the plant cultivating vessel (P1) includes a plurality of water inlet holes (2) in the bottom (B) and the bottom (B)of the plant cultivating vessel (P1) has an inner face which is formed higher at an outer area thereof than its area including the water inlet holes (2).

3. The plant cultivating device according to claim 1 or 2,
**characterized in that**
the plant cultivating vessel (P1) and/or the water reservoir vessel (P2) includes a guide mechanism (6) for allowing vertical displacement of the plant cultivating vessel (P1) and stabilizing the posture thereof when the plant cultivating vessel (P1) is accommodated inside the water reservoir vessel (P2).

4. A plant cultivating vessel (P1) for accommodating a plant cultivating medium (1) therein,
wherein the plant cultivating vessel (P1) is constructed such that the plant cultivating vessel (P1) when accommodating the plant cultivating medium (1) therein can float on the water and the plant cultivating vessel (P1) includes at least one water inlet hole (2) formed in a bottom (B) thereof so as to allow intrusion of water from the outside to the inside thereof under the floating condition,
the plant cultivating vessel (P1) is constructed such that the vessel will sink in the water (W) by a variable depth according to increase in the load of contents in the vessel. (P1), and
the bottom (B) of the plant cultivating vessel (P1) has an inner face which is formed higher at an outer area thereof than its area including the water inlet hole (2), and **characterized in that** for forming the outer area of the inner face of the bottom (B) of the plant cultivating vessel (P1) higher than the area thereof including the water inlet hole (2), the inner face of the bottom (B) of the plant cultivating vessel (P1) is provided as a stepped face.

## Patentansprüche

1. Pflanzenanbauvorrichtung mit einem Pflanzenzuchtgefäß (P1) zum Einsetzen eines Pflanzenaufzuchtmediums (1) und mit einem Wasserreservoir (P2), das zur Aufnahme des Pflanzenzuchtgefäßes(P1) und zur Bevorratung von Wasser(W) geeignet ist,
wobei das Pflanzenzuchtgefäß (P1) derart konstruiert ist, dass es bei eingesetztem Pflanzenaufzuchtmedium (1) auf dem Wasser schwimmen kann und wobei das Pflanzenzuchtgefäß (P1) zumindest eine Wassereinlassöffnung (2) in einem Boden (B) aufweist, um bei schwimmendem Zustand Wasserzufluss von der Außenseite zur Innenseite zu gestatten,
wobei das Pflanzenzuchtgefäß (P1) derart konstruiert ist, dass es im Wasser (W) einsinkt, und zwar in eine variable Tiefe entsprechend der Gewichtszunahme im Gefäß (P1),
und wobei der Boden (B) des Pflanzenzuchtgefäßes (P1) eine Innenseite aufweist,die in einem aüßeren Bereich höher liegt als in einem die Wassereinlassöffnung (2) aufweisendem Bereich, **dadurch gekennzeichnet,**
**dass** zur Höherlegung des äußeren Bereiches der Innenseite des Bodens (B) des Pflanzenzuchtgefäßes (P1) gegenüber dem die Wassereinlassöffnung (2) aufweisendem Bereich, die Innenseite des Bodens (B) des Pflanzenzuchtgefäßes (P1) als gestufte Fläche ausgebildet ist.

2. Pflanzenanbauvorrichtung nach Anspruch 1,
**dadurch gekennzeichnet,**
**dass** das Pflanzenzuchtgefäß (P1) mehrere Wassereinlassöffnungen (2) im Boden (B) aufweist und der Boden (B) des Pflanzenzuchtgefäßes (P1) eine Innenseite aufweist,die in einem äußeren Bereich höher liegt als in einem die Wassereinlassöffnungen (2) aufweisendem Bereich.

3. Pflanzenanbauvorrichtung nach Anspruch 1 oder 2,
**dadurch gekennzeichnet,**
**dass** das Pflanzenzuchtgefäß (P1) und/oder das Wasserreservoir (P2) einen Führungsmechanismus (6) aufweisen zur vertikalen Verlagerung und Lagestabilisierung des Pflanzenzuchtgefäßes (P1), wenn das Pflanzenzuchtgefäß (P1) in dem Wasserreservoir (P2) schwimmt.

4. Pflanzenzuchtgefäß (P1) zum Einsetzen eines Pflanzenzuchtmediums (1),
wobei das Pflanzenzuchtgefäß (P1) derart konstruiert ist, dass es bei eingesetztem Pflanzenaufzuchtmedium (1) auf dem Wasser schwimmen kann und wobei das Pflanzenzuchtgefäß (P1) zumindest eine Wassereinlassöffnung (2) in einem Boden (B) aufweist, um bei schwimmendem Zustand Wasserzufluss von der Außenseite zur Innenseite zu gestatten,
wobei das Pflanzenzuchtgefäß (P1) derart konstruiert ist, dass es im Wasser (W) einsinkt, und zwar in eine variable Tiefe entsprechend der Gewichtszunahme im Gefäß (P1),
und wobei der Boden (B) des Pflanzenzuchtgefäßes (P1) eine Innenseite aufweist,die in einem äußeren Bereich höher liegt als in einem die Wassereinlassöffnung (2) aufweisendem Bereich, **dadurch gekennzeichnet,**
**dass** zur Höherlegung des äußeren Bereiches der Innenseite des Bodens (B) des Pflanzenzuchtgefäßes (P1) gegenüber dem die Wassereinlassöffnung (2) aufweisendem Bereich die Innenseite des Bodens (B) des Pflanzenzuchtgefäßes (P1) als gestufte Fläche ausgebildet ist.

## Revendications

1. Dispositif de culture de plante comprenant un récipient de culture de plante (P1) destiné à recevoir un milieu de culture de plante (1) dans celui-ci et un récipient de réservoir d'eau (P2) capable de recevoir dans celui-ci le récipient de culture de plante (P1) et capable également de conserver dans celui-ci de l'eau (W),
dans lequel le récipient de culture de plante (P1) est construit de sorte que le récipient de culture de plante (P1), lorsqu'il reçoit dans celui-ci le milieu de culture de plante (1), puisse flotter sur l'eau et le récipient de culture de plante (P1) comprend au moins un trou d'entrée d'eau (2) formé dans un fond (B) de celui-ci de manière à permettre l'entrée d'eau depuis l'extérieur vers l'intérieur de celui-ci dans l'état de flottaison,
le récipient de culture de plante (P1) est construit de sorte que le récipient coule dans l'eau (W) à une profondeur variable en fonction de l'augmentation de la charge du contenu dans le récipient (P1), et
le fond (B) du récipient de culture de plante (P1) présente une face intérieure qui est formée plus haute au niveau d'une surface extérieure de celui-ci par rapport à sa surface comprenant le trou d'entrée d'eau (2), et **caractérisé en ce que**, pour former la surface extérieure de la face intérieure du fond (B) du récipient de culture de plante (P1) pour qu'elle soit plus haute que sa surface comprenant le trou d'entrée d'eau (2), la face intérieure du fond (B) du récipient de culture de plante (P1) est dotée d'une face à paliers.

2. Dispositif de culture de plante selon la revendication 1,
**caractérisé en ce que**
le récipient de culture de plante (P1) comprend une pluralité de trous d'entrée d'eau (2) dans le fond (B) et le fond (B) du récipient de culture de plante (P1) a une face intérieure qui est formée plus haute au niveau d'une surface extérieure de celui-ci par rapport à sa surface comprenant les trous d'entrée d'eau (2).

3. Dispositif de culture de plante selon la revendication 1 ou 2,
**caractérisé en ce que**
le récipient de culture de plante (P1) et/ou le récipient de réservoir d'eau (P2) comprennent un mécanisme de guidage (6) destiné à permettre un déplacement vertical du récipient de culture de plante (P1) et à stabiliser sa posture lorsque le récipient de culture de plante (P1) est reçu à l'intérieur du récipient de réservoir d'eau (P2).

4. Récipient de culture de plante (P1) destiné à recevoir un milieu de culture de plante (1) dans celui-ci,
où le récipient de culture de plante (P1) est construit de sorte que le récipient de culture de plante (P1), lorsqu'il reçoit dans celui-ci le milieu de culture de plante (1), puisse flotter sur l'eau et le récipient de culture de plante (P1) comprend au moins un trou d'entrée d'eau (2) formé dans un fond (B) de celui-ci de manière à permettre l'entrée d'eau depuis l'extérieur vers l'intérieur de celui-ci dans l'état de flottaison,
le récipient de culture de plante (P1) est construit de sorte que le récipient coule dans l'eau (W) à une profondeur variable en fonction de l'augmentation de la charge du contenu dans le récipient (P1), et
le fond (B) du récipient de culture de plante (P1) présente une face intérieure qui est formée plus haute au niveau d'une surface extérieure de celui-ci par rapport à sa surface comprenant le trou d'entrée d'eau (2), et **caractérisé en ce que**, pour former la surface extérieure de la face intérieure du fond (B) du récipient de culture de plante (P1) pour qu'elle soit plus haute que sa surface comprenant le trou d'entrée d'eau (2), la face intérieure du fond (B) du récipient de culture de plante (P1) est dotée d'une face à paliers.
